# EUROPÄISCHE PATENTSCHRIFT

(11) **EP 3 924 613 B1**
(45) Veröffentlichungstag und Bekanntmachung des Hinweises auf die Patenterteilung: **22.10.2025**
(21) Anmeldenummer: 20703178.2
(22) Anmeldetag: 29.01.2020
(51) Int. Cl.: F02M 21/02, F02M 63/00, F02D 19/06, F02D 19/10, F02M 43/04, F02M 55/00

(54) **GASINJEKTOR MIT AKTIVIERUNG MEHRERER DÜSENVENTILGLIEDER ÜBER EIN 3/2-WEGE PILOTVENTIL**
GAS INJECTOR WITH ACTIVATION OF A PLURALITY OF NOZZLE VALVE MEMBERS VIA A 3/2 WAY PILOT VALVE
INJECTEUR DE GAZ AVEC ACTIVATION DE MULTIPLES ÉLÉMENTS DE SOUPAPE DE BUSE PAR L'INTERMÉDIAIRE D'UNE SOUPAPE PILOTE À 3/2 VOIES

(30) Priorität: 12.02.2019 DE 102019103428
(43) Veröffentlichungstag der Anmeldung: 22.12.2021
(73) Patentinhaber: Woodward L'Orange GmbH, 70435 Stuttgart (DE)
(72) Erfinder: BERGER, Ingmar, Stuttgart 70374 (DE); NITSCHE, Michael, 71701 Schwieberdingen (DE); NOWAK, Heinrich, 71638 Ludwigsburg (DE); SIEBERT, Steffen, 71101 Schönaich (DE); KINDSVATER, Andre, 70499 Stuttgart (DE); BÄROW, Enrico, 70376 Stuttgart (DE)
(74) Vertreter: Fish & Richardson P.C.
(86) Internationale Anmeldenummer: PCT/EP2020/052101
(87) Internationale Veröffentlichungsnummer: WO 2020/164908

(56) Entgegenhaltungen:
- DE-A1- 102005 058 079
- DE-A1- 102016 002 228
- DE-B3- 102013 022 260
- DE-B3- 102016 000 894
- US-A1- 2001 007 338

## Beschreibung

Die vorliegende Erfindung betrifft einen Kraftstoffinjektor gemäß Anspruch 1.

Aus der Druckschrift DE 10 2013 022 260 B3 ist ein Dual-Fuel-Kraftstoffinjektor bekannt, welcher für einen Betrieb mit Flüssigkraftstoff und Brenngas bereitgestellt ist und bei welchem sowohl die Flüssigkraftstoff-Düsennadel als auch die Brenngas-Düsennadeln via den Flüssigkraftstoff, insbesondere mit dessen Systemdruckniveau, hydraulisch gesteuert werden. Durch die Entlastung eines Steuerraums oberhalb der jeweiligen Brenngas-Düsennadel überwiegt eine brenngasdruckbedingte Kraft auf die Druckstufe der Brenngas-Düsennadel und drängt diese in Öffnungsrichtung. Mittels der brenngasdruckbedingten Kraft muss also das Steuermedium aus dem Steuerraum verdrängt werden, daneben die jeweilige Brenngas-Düsennadel beschleunigt werden. Bei Injektoren nach diesem Prinzip kann es jedoch vorkommen, dass bei einer etwas kleineren Druckstufe und lediglich geringen Drücken des Einspritzmediums, zum Beispiel bei Brenngas mit Druckniveaus von ca. 350 bar, die Brenngas-Düsennadel zu langsam öffnet, so dass die Verwendung eines solchen Kraftstoffinjektors mit einem schnell laufenden Motor unter Umständen nicht möglich ist.
Aus der Druckschrift DE 10 2016 002 228 A1 ist ein Kraftstoffinjektor bekannt, welcher zur gemeinschaftlichen Hubsteuerung von Brenngas-Düsenventilgliedern mittels eines 4/2-Wege-Ventils eingerichtet ist. Mittels des 4/2-Wege-Ventils werden die Druckverhältnisse an einem mit der Nadel verbundenen Kolben umgeschaltet. Es ist jedoch nicht möglich Injektoren nach diesem Prinzip in den Bauraum kleinerer Motoren zu integrieren. Des Weiteren kann es bei Injektoren nach diesem Prinzip vorkommen, dass bei sehr geringen Drücken, bei denen sich die Brenngas-Düsennadel eines Kraftstoffinjektors mit 3/2-Wege-Ventil entsprechend der vorliegenden Erfindung hinreichend schnell öffnet, sich die Düsennadel zu langsam öffnet.

Ein weiterer Kraftstoffinjektor ist aus der DE102016000894 B3 bekannt.

Ausgehend hiervon ist es Aufgabe der vorliegenden Erfindung, einen Kraftstoffinjektor bereitzustellen, bei welchem eine Mehrzahl von Brenngas-Düsenventilgliedern, insbesondere in Form von Brenngas-Düsennadeln, hydraulisch mit der beabsichtigten Hubgeschwindigkeit, insbesondere zuverlässig bzw. robust und weiterhin unaufwändig, gesteuert werden können, und der insbesondere in den Bauraum kleinerer Motoren integriert werden kann.

Diese Aufgabe wird mit einem Kraftstoffinjektor mit den Merkmalen des Anspruchs 1 gelöst.

Vorteilhafte Weiterbildungen und Ausführungsformen der Erfindung sind in den weiteren Ansprüchen angegeben.

Vorgeschlagen wird erfindungsgemäß ein Kraftstoffinjektor für den Betrieb mit gasförmigem Brennstoff bzw. Brenngas, zum Beispiel in Form von Erdgas, Sondergas, Deponiegas, Biogas, Wasserstoff o. ä. Der Kraftstoffinjektor kann ein Single-Fuel-Injektor sein, welcher nur für das Ausdüsen von Brenngas bereitgestellt ist, alternativ und bevorzugt ein Dual-Fuel-Kraftstoffinjektor, welcher neben Brenngas auch Flüssigkraftstoff ausdüsen kann, zum Beispiel Dieselkraftstoff, Schweröl oder Bioöl. Ein solcher Kraftstoffinjektor ist zum Beispiel für einen Zündstrahlbetrieb vorgesehen, bei welchem mittels einer geringen Flüssigkraftstoff-Einspritzmenge (Zündstrahl) das Brenngas entzündet wird. Allgemein ist der Kraftstoffinjektor bevorzugt Bestandteil einer Common-Rail-Kraftstoffeinspritzeinrichtung.

Allgemein kann der Kraftstoffinjektor z. B. mit einem Kleinmotor verwendet werden, zum Beispiel in einem Kraftfahrzeug wie etwa einem LKW, einem Automobil, einem Sonderfahrzeug oder einem Nutzfahrzeug, oder zum Beispiel für eine stationäre Einrichtung vorgesehen sein, z. B. für ein (Not-)Stromaggregat, z. B. auch für Industrieanwendungen.

Der vorgeschlagene Kraftstoffinjektor weist eine Mehrzahl von Brenngas-Düsenventilgliedern auf, welche insbesondere je als Brenngas-Düsennadel bereitgestellt sind. Die Brenngas-Düsenventilglieder sind am Kraftstoffinjektor bevorzugt in einem Düsenkörper desselben angeordnet, weiterhin bevorzugt in einer Anordnung, bei welcher die Brenngas-Düsenventilglieder in Umfangsrichtung des Düsenkörpers bzw. des Kraftstoffinjektors verteilt angeordnet sind. Bei Ausgestaltungen mit drei Brenngas-Düsenventilgliedern weisen diese zum Beispiel einen Versatz von 120° zueinander in der Umfangsrichtung auf. Daneben sind auch Ausgestaltungen denkbar, welche zwei, vier oder mehr Brenngas-Düsenventilglieder aufweisen, z. B. mit Versatz um 180° bzw. 90° oder einem davon verschiedenen Versatz. Mit solchen erfindungsgemäßen Ausgestaltungen mit einer Mehrzahl von Brenngas-Düsenventilgliedern können die zu bewegenden Massen derselben vorteilhaft klein gehalten werden, so dass schnelle Hubbewegungen möglich werden, während gleichzeitig eine gute rundumseitige Brenngas-Ausbringung in einen Brennraum mittels der Mehrzahl von Brenngas-Düsenventilgliedern - welche hierbei je mit einer Düsen- bzw. Spritzlochgruppe des Kraftstoffinjektors dieselbe selektiv versperrend zusammenwirken können - ermöglicht ist, insbesondere auch ein symmetrisches Spritzbild.

Mit Vorteil ist bei der Erfindung ein jedes der Brenngas-Düsenventilglieder über je eine zugeordnete hydraulische bzw. hydraulisch betätigbare Kolbensteueranordnung des Kraftstoffinjektors hubsteuerbar, welche je mittels zweier Steuerräume und einem dieselben volumenvariabel trennenden Kolbenabschnitt an dem der Kolbensteueranordnung zugeordneten Brenngas-Düsenventilglied gebildet ist. Einem der Steuerräume einer jeweiligen Kolbensteueranordnung kommt hierbei die Funktion zu, bei hydraulischer Belastung einen Schließdruck gegen den Kolbenabschnitt, mithin das Brenngas-Düsenventilglied ausüben zu können, dem jeweiligen anderen Steuerraum die Funktion, bei hydraulischer Belastung einen Öffnungsdruck gegen den Kolbenabschnitt, mithin das Brenngas-Düsenventilglied ausüben zu können. In dieser Hinsicht weisen die Kolbensteueranordnungen insoweit je einen Schließdruck- und einen Öffnungsdruck-Steuerraum auf.

Im Rahmen einer solchen Ausgestaltung sind die Steuerräume zum Beispiel in einem (zylindrischen) Gehäuse der Kolbensteueranordnung gebildet, in welchem auch der Kolbenabschnitt dieselben volumenvariabel voneinander trennend aufgenommen ist. Die Kolbensteueranordnung ist bevorzugt an einem düsenfernen Ende eines wie oben erwähnten Düsenkörpers gebildet, wobei die Steuerräume und das Gehäuse im Wesentlichen oder ausschließlich im Düsenkörper bereitgestellt sein können. Durch Anordnung am düsenfernen Ende ist hierbei auch eine vorteilhaft einfache Bearbeitung infolge uneingeschränkter Zugänglichkeit im Rahmen der Herstellung der Kolbensteueranordnung bzw. des Kraftstoffinjektors gegeben.

Bei der Erfindung wird im Rahmen der Steuerräume einer jeweiligen Kolbensteueranordnung hierbei ein düsennäherer und ein düsenfernerer Steuerraum gebildet (voneinander durch den Kolbenabschnitt getrennt), das heißt mit Bezug auf eine Düsenseite des Kraftstoffinjektors. Der düsennähere Steuerraum ist hierbei insbesondere der Öffnungsdruck-Steuerraum, der düsenfernere Steuerraum der Schließdruck-Steuerraum. Der Öffnungsdruck-Steuerraum wird dauerhaft mit einem Steuer- bzw. Sperröldruck beaufschlagt. Die Beaufschlagung wird über eine Steuerleitung dauerhaft erzielt. Die Steuerleitung ist nicht mit den düsenfernen Steuerräumen verbunden. Die Druckquelle für die Steuerleitung kann auch der Steuer- bzw. Sperröldruck sein. Die Steuerräume werden gemeinsam über eine Steuerleitung dauerhaft beaufschlagt. Es ist auch möglich die Steuerräume über beispielsweise drei getrennte Steuerleitungen zur selben Druckquelle zu beaufschlagen.
Die Faktoren, die maßgeblich sind für den Vorteil der Bauraumersparnis bzw. der Möglichkeit des Einbaus in kleinere Motoren, bestehen daraus, dass die Sperrölnut und damit deren Anschluss entfallen kann, wenn Steueröldruck zur Beaufschlagung der düsennahen Steuerräume der Brenngas-Düsennadeln verwendet wird. Der Beaufschlagungs-Druck muss, damit er die Sperrölfunktion übernehmen kann, größer als der Brenngasdruck sein.
Um ein gleichmäßiges Öffnen der Brenngas-Düsennadeln zu erreichen, kann es sinnvoll sein, die Öffnungsdruck-Steuerräume auch im Bereich des Düsenkörpers über eine Strömungsverbindung kommunizieren zu lassen. Somit kann eine Kommunikation zwischen den Öffnungsdruck-Steuerräumen sowohl im Bereich des Düsenkörpers, als auch im Bereich des Anschlusses oder des 3/2-Ventils des Kraftstoffinjektors erfolgen. Es kann andererseits auch vorteilhaft sein, die Steuerleitungen getrennt zu führen. Bevorzugt möglichst weit voneinander getrennt. Denn falls eine Brenngas-Düsennadel aufgrund von Toleranz-Streuungen früher beginnt sich zu öffnen, wird durch die Brenngas-Düsennadel-Bewegung der einen Düsennadel der Drucküberschuss der anderen Brenngas-Düsennadel verringert. Dies wird durch eine möglichst starke Entkopplung beispielsweise durch lange Steuerleitungen vermindert.

Der Kolbenabschnitt an einem jeweiligen Brenngas-Düsenventilglied kann ein entsprechend kolbenförmig ausgeformter, insbesondere aufgeweiteter, Abschnitt des jeweiligen Brenngas-Düsenventilglieds sein, insbesondere ein Endabschnitt. Alternativ kann der Kolbenabschnitt zum Beispiel durch ein an dem Brenngas-Düsenventilglied gehaltertes Kolbenelement gebildet sein, z. B. durch ein aufgepresstes Ringelement.

Mittels der jeweiligen derart gebildeten Kolbensteueranordnungen - und insbesondere einer Ausgestaltung der Brenngas-Düsenventilglieder mit einer möglichst vernachlässigbar kleinen, dem Brenngasdruck ausgesetzten Druckstufe - wird es möglich, das jeweilige Brenngas-Düsenventilglied weitgehend unabhängig von einem daran anliegenden Brenngasdruck hubsteuern zu können, ins- besondere axial verschieblich. Derart kann auch bei lediglich geringen oder nahezu nicht vorhandenen Brenngasdrücken eine vorteilhaft schnelle Hubgeschwindigkeit des jeweiligen Brenngas-Düsenventilglieds erzielt werden, das heißt durch aktive hydraulische (Zwangs-)Steuerung mittels der Kolbensteueranordnungen. Daneben kann durch Dimensionierung der jeweiligen Kolben- abschnittsflächen auch ein beabsichtigtes Hubverhalten auf einfache Weise eingestellt werden.

Weiterhin vorteilhaft baulich unaufwändig und gleichzeitig robust ist der Kraftstoffinjektor eingerichtet, die Brenngas-Düsenventilglieder, insbesondere sämtliche, mittels eines 3/2-Wege-Ventils bzw. 3/2-Wege-Pilotventils, insbesondere eines einzigen 3/2-Wege-Ventils, gemeinschaftlich hubzusteuern, wobei über das 3/2-Wege-Ventil ein Hydraulikdruck in dem Schließungs-Steuerraum der Kolbensteueranordnungen gesteuert wird und der Öffnungsdruck-Steuerraum dauerhaft mit einem Steuer- bzw. Sperröldruck beaufschlagt wird. Bevorzugt ist das 3/2-Wege-Ventil allgemein als Schieberventil ausgestaltet.

Vorzugsweise ist der Kraftstoffinjektor hierbei eingerichtet, über das 3/2-Wege-Ventil ein einheitliches Hydraulik-Druckniveau in jeweiligen Schließdruck-Steuerräumen zu bewirken bzw. einsteuern zu können, z. B. ein Entlastungs- oder Belastungs-Druckniveau, während ein einheitliches zweites Hydraulik-Druckniveau, zum Beispiel ein Belastungs- bzw. Entlastungs-Druckniveau in jeweiligen Öffnungsdruck-Steuerräumen eingestellt ist. Allgemein erfolgt die Drucksteuerung über das 3/2- Wege-Ventil hierbei so, dass - bei Verwendung des Kraftstoffinjektors mit einer Kraftstoffeinspritzeinrichtung - für einen Öffnungshub der Brenngas-Düsenventilglieder die Schließdruck-Steuerräume einheitlich entlastet werden (z. B. Leckagedruckniveau, z. B. bis 10 bar), während die Öffnungsdruck-Steuerräume einheitlich belastet bleiben (z. B. Steuerfluid-Hochdruckniveau, z. B. 550 bar), für einen Schließhub die Öffnungsdruck-Steuerräume entsprechend belastet bleiben und die Schließdruck-Steuerräume belastet werden. Hierfür kann ein Hochdruck-Strömungspfad (Steuerfluid) seitens einer Steuerfluid-Hochdruckquelle an das 3/2-Wege-Ventil geführt sein, daneben ein Leckageströmungspfad vom 3/2-Wege-Ventil hin zur Niederdruckseite (Leckage). Die Nadel bleibt bei Belastung der Öffnungsdruck-Steuerräume und Belastung der Schließdruck-Steuerräume geschlossen, da die Kraft in Richtung des düsennäheren Endes aufgrund der Flächenverhältnisse größer ist als die Kraft in Richtung des düsenferneren Endes.

Mit dieser Ausgestaltung wird es vorteilhaft möglich, eine Druckumschaltung gleichzeitig auf alle Brenngas-Düsenventilglieder wirken zu lassen. Eine Hubsteuerung der Brenngas-Düsenventilglieder kann hierbei weitestgehend unabhängig vom Brenngasdruck erfolgen, so dass auch Einspritzvorgänge mit sehr geringem Brenngasdruckniveau möglich sind. Daneben können quasi beliebige Brenngas-Druckniveaus eingestellt werden, d. h. falls das jeweilige Brenngas-Düsenventilglied - wie im Rahmen der Erfindung vorgeschlagen - hierbei keine Druckstufe aufweist, welche im Zusammenwirken mit einem Brenngasdruck das Öffnungs- und Schließverhalten nennenswert beeinflusst.

Im Rahmen der Erfindung wird in weiterer Ausgestaltung des Kraftstoffinjektors vorgeschlagen, dass die Schließdruck-Steuerräume über einen Strömungsweg (bzw. einen ersten Strömungskanal) miteinander kommunizierend verbunden sind, welcher ihrerseits an das 3/2-Wege-Ventil zur gemeinschaftlichen Hubsteuerung der Brenngas-Düsenventilglieder geschaltet ist. Ein solcher Strömungsweg, welcher die Schließdruck-Steuerräume kommunizierend verbindet, ist bevorzugt mittels einer Anzahl von Kanälen gebildet, bevorzugt eine Ringleitung bildend. Denkbar ist jedoch auch eine Verbindung der Schließdruck-Steuerräume über einen Strömungsweg in Form einer Sternleitung.

Bei vorteilhaften Ausgestaltungen, bei welchen die Schließdruck-Steuerräume an einem düsenfernen Ende des Düsenkörpers gebildet sind, ist eine solche Strömungsverbindung, insbesondere Ringleitung, bevorzugt mittels einer Nut gebildet, welche in den Düsenkörper gearbeitet ist, insbesondere in eine düsenferne Oberfläche desselben.

Weiterhin bevorzugt wird im Rahmen der Erfindung, dass die Öffnungsdruck-Steuerräume, insbesondere also die düsennäheren Steuerräume, über eine Strömungsverbindung (bzw. über einen zweiten Strömungskanal) miteinander kommunizieren. Eine solche Strömungsverbindung ist bevorzugt wiederum mittels einer Anzahl von Kanälen gebildet, insbesondere als Sternleitung. Eine solche Sternleitung kann zum Beispiel mittels (Schräg-)Bohrungen gebildet sein, welche ausgehend von einem Knotenpunkt an die jeweiligen Öffnungsdruck-Steuerräume verzweigende Kanäle bilden. Denkbar ist jedoch auch eine Ringleitung zur Verbindung der Öffnungsdruck-Steuerräume.

Weiterhin gehen vorteilhafte Ausgestaltungen der Erfindung dahin, dass die düsenferneren und/oder die düsennäheren Steuerräume Ringräume sind. Bei solchen Ausführungsformen kann der Kraftstoffinjektor je Brenngas-Düsenventilglied ein vorspannkraftbeaufschlagtes Schließglied aufweisen, welches düsenfern gegen das Brenngas-Düsenventilglied gedrängt ist, wobei weiterhin insbesondere ein ringraumförmiger düsenferner Steuerraum bzw. Schließdruck-Steuerraum gebildet wird, das heißt um das Schließglied herum. Mittels des Schließglieds kann ein unbeabsichtigtes Öffnen im Fehlerfalle vermieden und eine beabsichtigte Schließkraft auf einfache Weise eingestellt werden.

Ein jeweiliger düsennäherer bzw. Öffnungsdruck-Steuerraum - als Ringraum gebildet - kann ferner um das Brenngas-Düsenventilglied herum gebildet sein, welches sich hierbei ausgehend vom Kolbenabschnitt stangenförmig fortsetzen kann, d. h. hin zur Düsenanordnung.

Bei vorteilhaft baulich unaufwändig bereitstellbaren Ausführungsformen des Kraftstoffinjektors weisen die Kolbensteueranordnungen weiterhin in einer gemeinsamen (radialen) Ebene ein düsenfernes Ende auf, an welchem mittels eines Injektorgehäuseelements eine Deckelung der Schließdruck-Steuerräume bewirkt ist. In dem Injektorgehäuseelement kann hierbei auch ein jeweiliges Schließglied aufgenommen sein, s. oben, welches aus dem Injektorgehäuseelement austauchend endseitig gegen ein zugeordnetes, im Düsenkörper aufgenommenes Brenngas-Düsenventilglied in Anlage drängbar ist. Ein solches Injektorgehäuseelement ist zum Beispiel eine Zwischenplatte.

Besonders vorteilhaft kann mittels einer solchen Ausgestaltung, bei welcher die Kolbensteueranordnungen in einer gemeinsamen Ebene ein düsenfernes Ende aufweisen, an welchem mittels eines Injektorgehäuseelements eine Deckelung der Schließdruck-Steuerräume bewirkt ist, auch eine Deckelung eines Steuerraumes eines Flüssigkraftstoff-Düsenventilglieds des Kraftstoffinjektors bewirkt werden, d. h. bei Ausgestaltung als Mehrstoff-Kraftstoffinjektor.

Beachtlich ist im Rahmen der Erfindung auch, dass der vorgeschlagene Kraftstoffinjektor eingerichtet ist, die Kolbensteueranordnungen mit einem hydraulischen Steuerfluid zu beaufschlagen, welches eigens für die Brenngas-Düsenventilglied-Drucksteuerung in den Öffnungsdruck-Steuerräumen dauerhaft gehalten und über das 3/2-Wege-Ventil an die Schließdruck-Steuerräume versorgt wird. Somit kann der Brenngas-Betrieb unabhängig von sonstigen MedienDruckniveaus am Kraftstoffinjektor erfolgen, zum Beispiel unabhängig von einem Flüssigkraftstoff-Einspritzdruck bzw. -Systemdruck. Dadurch, dass das Aktuierungs-Fluid (Steuerfluid, z. B. Steueröl) und eingespritztes Medium (Brenngas, Flüssigraftstoff) hierbei voneinander unabhängig sind, kann der Kraftstoffinjektor äußerst flexibel eingesetzt werden.

Angemerkt sei auch, dass das 3/2-Wege- Ventil (bzw. -Pilotventil) im Rahmen der Erfindung bevorzugt derart mit den Steuerräumen verschaltet ist, dass in der inaktiven Ventilstellung bzw. Grundstellung - und Verwendung im Brenngas-Betrieb - ein jeweiliger Schließdruck-Steuerraum stets belastet ist.

Mit der Erfindung wird auch eine Kraftstoffeinspritzeinrichtung vorgeschlagen, welche wenigstens einen wie vorstehend erörterten Kraftstoffinjektor aufweist. Eine solche Kraftstoffeinspritzeinrichtung weist bevorzugt eine separate Steuerfluid-Versorgungseinrichtung für die gemeinschaftliche Hubsteuerung der Brenngas-Düsenventilglieder über das 3/2-Wege-Ventil auf, so dass insbesondere die vorstehend benannten Vorteile der flexiblen Einsetzbarkeit und der Unabhängigkeit von Brennmedien-Druckniveaus erzielt werden können.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen. Die einzelnen Merkmale können je einzeln für sich oder zu mehreren in verschiedener Kombination bei einer Variante der Erfindung verwirklicht sein.

Bevorzugte Ausführungsformen der Erfindung werden nachfolgend anhand der beigefügten Zeichnungen näher erläutert. Es zeigen:
Fig. 1 exemplarisch und schematisch ein Struktur-Schaubild eines Kraftstoffinjektors gemäß einem Vergleichsbeispiel, das zum Verständnis der vorliegenden Erfindung beitragen kann.
Fig. 2 exemplarisch und schematisch ein Schaubild fokussiert auf die Anordnung von Düsenventilgliedern in einem Düsenkörper eines Kraftstoffinjektors gemäß einem Vergleichsbeispiel, das zum Verständnis der Erfindung beitragen kann.
Fig. 3 exemplarisch und schematisch eine abgebrochene Ansicht einer weiteren möglichen Ausführungsform eines erfindungsgemäßen Kraftstoffinjektors, ein Brenngas-Düsenventilglied belastet durch ein Schließglied zeigend.
Fig. 4 exemplarisch und schematisch eine Draufsicht auf einen Düsenkörper eines erfindungsgemäßen Kraftstoffinjektors.

In der nachfolgenden Beschreibung und den Zeichnungen entsprechen gleichen Bezugszeichen Elemente gleicher oder vergleichbarer Funktion.

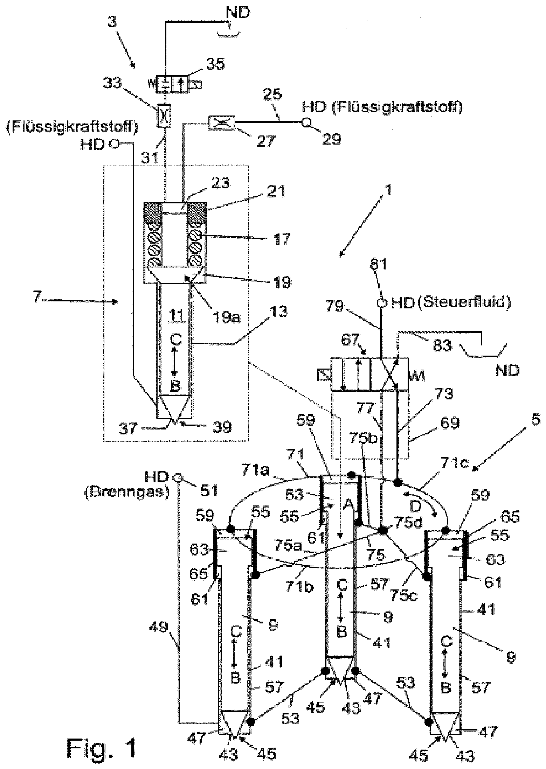

**Fig.** 1 zeigt exemplarisch und schematisch einen Kraftstoffinjektor **1** für den Betrieb mit Brenngas, z. B. Methan (oder auch Methanol), Biogas, Sondergas etc., wobei der Kraftstoffinjektor als Dual-Fuel-Kraftstoffinjektor **1** bereitgestellt ist und wobei ein Flüssigkraftstoffteil **3** des Kraftstoffinjektors **1** - zum Zwecke der besseren Übersichtlichkeit - separiert von einem Brenngasteil **5** des Kraftstoffinjektors **1** veranschaulicht ist.

Bei dem Kraftstoffinjektor **1** ist ein Flüssigkraftstoff-Düsenventilteil **7** des Flüssigkraftstoffteils **3** zur Anordnung inmitten einer Mehrzahl von Brenngas-Düsenventilgliedern des Brenngasteils vorgesehen, dargestellt durch den Pfeil A. Hierbei weist der Flüssigkraftstoff-Düsenventilteil **7** ein Flüssigkraftstoff-Düsenventilglied **11** in Form einer Flüssigkraftstoff-Düsennadel auf, welches in einer Axialbohrung **13** eines (in **Fig.** 1 nicht veranschaulichten) Düsenkörpers **15** des Kraftstoffinjektors **1** aufgenommen ist. Das Flüssigkraftstoff-Düsenventilglied **11** ist in einer Schließrichtung B vorgespannt, das heißt mittels einer Schließfeder **17** belastet, welche einenends gegen einen Bund **19** am Flüssigkraftstoff-Düsenventilglied **11** und andernends an einer Führungshülse **21** abgestützt ist. Mittels der Führungshülse **21** - und einem darin geführten Endabschnitt des Flüssigkraftstoff-Düsenventilglieds **11** - ist weiterhin ein Steuerraum **23** für das Flüssigkraftstoff-Düsenventilglied **11** definiert.

Der Steuerraum **23** kann über einen (Hochdruck-)Belastungs-Strömungspfad **25** - mit darin angeordneter Drosselvorrichtung **27** - ausgehend von einem Flüssigkraftstoff-Einlass **29** am Kraftstoffinjektor **1** belastet werden, so dass das Flüssigkraftstoff-Düsenventilglied **11** in Schließstellung gedrängt wird. Über einen (Niederdruck-)Entlastungs- Strömungspfad **31** - mit darin angeordneter Drosselvorrichtung **33** - kann der Steuerraum **23** selektiv mittels eines (2/2-Wege)Pilotventils **35** entlastet werden, das heißt um das Flüssigkraftstoff-Düsenventilglied **11** in Öffnungsstellung zu steuern (bei welcher das Flüssigkraftstoff-Düsenventilglied **11** aus einem Ventilsitz **37** abhebt und Flüssigkraftstoff über eine nachgeordnete Flüssigkraftstoff-Düsenanordnung **39** ausbringbar ist), Pfeilrichtung C. Das Flüssigkraftstoff-Düsenventilglied **11** weist zu seiner Hubsteuerung hierbei weiterhin - insbesondere gebildet mittels der Ringschulter **19** - eine das Hubverhalten maßgeblich beeinflussende Druckstufe **19a** auf, gegen welche in die Axialbohrung **13** eingebrachter, hochdruckbelasteter Flüssigkraftstoff wirken, mithin eine Kraft in Öffnungsrichtung C erzielen kann.

Wie oben bereits erwähnt und in **Fig.** 1 weiter veranschaulicht ist, weist der Kraftstoffinjektor bzw. dessen Brenngasteil **5** eine Mehrzahl von Brenngas-Düsenventilgliedern **9** auf, vorliegend insbesondere drei Brenngas-Düsenventilglieder **9,** welche je in Form von Brenngas-Düsennadeln bereitgestellt sind. Die Brenngas-Düsenventilglieder **9** sind hierbei möglichst kurz dimensioniert, so dass deren zu bewegende Masse vorteilhaft gering ausfällt. Ein jedes der Brenngas-Düsenventilglieder **9** ist in einer zugehörigen axialen Aufnahme **41,** insbesondere Axialbohrung, im Düsenkörper **15** aufgenommen, d. h. axial hubverschieblich, wobei die Brenngas-Düsenventilglieder **9** um das zentral angeordnete Flüssigkraftstoff-Düsenventilglied herum angeordnet sind. Bei der dargestellten Anordnung weisen die Brenngas-Düsenventilglieder einen Versatz in Umfangsrichtung D von 120° zueinander auf.

An einem düsenseitigen Ende eines jeden Brenngas-Düsenventilglieds **9** wirkt dieses gegen einen Brenngas-Düsenventilsitz **43,** das heißt stromauf einer einem jeweiligen Brenngas-Düsenventilglied **9** zugeordneten Brenngas-Düsengruppe **45,** gebildet mittels eines oder mehrerer Spritzlöcher. Mit dem Kraftstoffinjektor **1** kann Brenngas zum Beispiel mit einem Druckniveau von etwa 350 bar bis 550 bar ausgedüst werden (wobei sich aufgrund des symmetrischen Versatzes der Brenngas-Düsenventilglieder **9** ein symmetrisches Spritzbild über 360° erzielen lässt). Um das Brenngas - mit Abheben der Brenngas-Düsenventilglieder **9** aus dem jeweiligen Sitz **43 -** an die Brenngas-Düsengruppen **45** versorgen zu können, sind Brenngas-Düsenräume **47** an jeweiligen Brenngas-Düsenventilgliedern **9** an eine (Hochdruck)Brenngas-Versorgungsleitung **49,** ausgehend von einem Brenngas-Einlass **51** des Kraftstoffinjektors **1,** kommunizierend angebunden, z. B. über Zweige **53.**

Angemerkt sei an dieser Stelle, dass die Brenngas-Düsenventilglieder **9,** wie dies auch **Fig.** 1 veranschaulicht, im Rahmen der vorliegenden Erfindung bevorzugt keine solche Druckstufe aufweisen, welche bei Brenngas-Betrieb aufgrund eines dagegen wirkenden Brenngas-Drucks das Hubverhalten maßgeblich beeinflusst.

Der Kraftstoffinjektor **1** weist für ein jedes der Brenngas-Düsenventilglieder **9** je eine hydraulische bzw. hydraulisch betätigbare Kolbensteueranordnung **55** auf, über welche das jeweilige Brenngas-Düsenventilglied **9** hubsteuerbar ist, das heißt hydraulisch hubsteuerbar. Die jeweilige Kolbensteueranordnung **55** ist an einem düsenfernen Endabschnitt eines jeweiligen Brenngas-Düsenventilglieds **9** gebildet, d. h. benachbart zu einem düsenfernen Ende einer Spaltführung **57** für das jeweilige Brenngas-Düsenventilglied **9.**

Eine jeweilige Kolbensteueranordnung **55** umfasst zwei Steuerräume **59, 61** und einen dieselben volumenvariabel trennenden Kolbenabschnitt 63 an dem der Kolbensteueranordnung **55** zugeordneten Brenngas-Düsenventilglied **9.** Einer der zwei Steuerräume **59, 61** ist hierbei ein düsenfernerer Steuerraum **59,** welcher dazu bereitgestellt ist, eine Schließkraft auf das zugeordnete Brenngas-Düsenventilglied **9** ausüben zu können (in Schließrichtung B), das heißt bei hydraulischer Belastung des Steuerraums **59.** Insofern ist der düsenfernere Steuerraum im Rahmen der vorliegenden Erfindung auch als Schließdruck-Steuerraum **59** bezeichnet. Der weitere Steuerraum **61** ist hierbei ein düsennäherer Steuerraum **61,** welcher dazu bereitgestellt ist, eine Kraft in Öffnungsrichtung C (Öffnungsdruck) bei Belastung desselben auf das jeweilige Brenngas-Düsenventilglied **9** ausüben zu können. Insoweit ist der düsennähere Steuerraum auch als Öffnungsdruck-Steuerraum **61** im Rahmen der vorliegenden Erfindung bezeichnet.

Die Steuerräume **59, 61** einer jeweiligen Kolbensteueranordnung **55** sind in einem Gehäuse **65** derselben aufgenommen, welches mittels einer Querschnittserweiterung der das Brenngas-Düsenventilglied **9** aufnehmenden Axialbohrung **41** gebildet sein kann. Eine Deckelung des jeweiligen Gehäuses **65** kann hierbei vorteilhaft einfach mittels eines Injektorgehäuseelements erfolgen (in **Fig.** 1 nicht dargestellt).

Wie **Fig.** 1 weiterhin in dem Vergleichsbeispiel zeigt, ist der Kraftstoffinjektor **1** erfindungsgemäß zur gemeinschaftlichen, insbesondere auch gleichzeitigen, Hubsteuerung der Brenngas-Düsenventilglieder **9** mittels eines, insbesondere eines einzigen, 3/2-Wege-Ventils **67** (bzw. 3/2-Wege-Pilotventils **67)** eingerichtet, hierbei insbesondere auch dazu, die Brenngas-Düsenventilglieder **9** einheitlich zu steuern, d. h. im Rahmen der gemeinschaftlichen Hubsteuerung einheitlich in Öffnungs- oder Schließstellung. Mit dem 3/2-Wege-Ventil **67** ist hierfür ein Hydraulikdruck in den Schließdruck-Steuerräumen **59** der Kolbensteueranordnungen **55** steuerbar, insbesondere in sämtlichen Schließdruck-Steuerräumen **59, 61.**

In diesem Rahmen ist der Kraftstoffinjektor insbesondere befähigt, ein erstes einheitliches Hydraulikdruck-Niveau in der Mehrzahl der Öffnungsdruck-Steuerräume **61** einzustellen, wobei die Öffnungsdruck-Steuerräume über eine Steuerleitung dauerhaft mit Steuer- bzw. Sperröldruck beaufschlagt sind, und ein zweites einheitliches Hydraulikdruck-Niveau in der Mehrzahl der Schließdruck-Steuerräume **59** mittels des 3/2-Wege-Ventils **67** einzusteuern, das heißt in einer jeweiligen Stellung des 3/2-Wege-Ventils **67.** Durch die derart gekoppelte Betätigbarkeit der Brenngas-Düsenventilglieder **9** mittels eines einzigen 3/2-WegeVentils **67** ist vorteilhaft eine bauraumsparende Ausgestaltung des Kraftstoffinjektors **1** ermöglicht. Bevorzugt ist das 3/2-Wege-Ventil **67** z. B. als Schieberventil ausgeführt, welches robust und zuverlässig ausbildbar ist. Das 3/2-Wege-Ventil **67** kann zum Beispiel an einem düsenfernen Ende des Kraftstoffinjektors **1** angeordnet sein, zum Beispiel an einem Einzeldruckspeicher **69** desselben, so dass eine einfache Anordnung und Zugänglichkeit gegeben ist.

Um die Brenngas-Düsenventilglieder **9** sämtlich und einheitlich mittels des 3/2-Wege-Ventils **67** in die jeweilige Steuerstellung steuern zu können, weiterhin baulich unaufwändig, sind die Schließdruck- Steuerräume **59** über einen Strömungsweg **71** miteinander kommunizierend verbunden, welcher - über einen Abzweig **73** - an das 3/2-Wege-Ventil **67** zur gemeinschaftlichen Hubsteuerung der Brenngas-Düsenventilglieder **9** geschaltet ist. Der Strömungsweg **71,** welcher die Schließdruck-Steuerräume **59** hierbei verbindet, insbesondere mit resultierend nahezu einheitlichem Druckniveau, ist vorzugsweise ein Ringkanal **71,** weiterhin bevorzugt gebildet mittels einer Ringnut in der Oberfläche des Düsenkörpers. Hierauf wird nachfolgend noch näher eingegangen. Die Anbindung der Schließdruck-Steuerräume **59** an den Ringkanal **71** kann z. B. über Einstiche erfolgen.

Wie **Fig.** 1 weiterhin veranschaulicht, kommunizieren auch die dauerhaft mit Steuerfluid belasteten Öffnungsdruck-Steuerräume **61** vorzugsweise miteinander, das heißt über eine Strömungsverbindung **75.** Zur Verbindung der Öffnungsdruck-Steuerräume **61** kann eine Stemleitung vorgesehen sein, welche die Leitungszweige **75a, b, c** seitens der Öffnungsdruck-Steuerräume **61** an einen Knoten **75d** zusammenführt. Zur Herstellung der Strömungsverbindung **75** können auf einfache Weise Schrägbohrungen in den Düsenkörper **15** gearbeitet sein, d. h. je Leitungszweig **75a, b, c.** Beachtlich kann hierbei werden, dass bei Bedarf auch ein Öffnungs- oder Schließzeitversatz - über die Brenngas-Düsenventilglieder **9** hinweg betrachtet
- über geeignete Wahl der Leitungslängen der Leitungszweige **75a, b, c** einstellbar ist.

Bei dem Kraftstoffinjektor **1** ist das 3/2-Wege-Ventil **67** - zum Zwecke der Hubsteuerung der Brenngas-Düsenventilglieder **9** weiterhin derart an einen Steuerfluid-Versorgungszweig **79** (ausgehend von einem Steuerfluid-Einlass **81** des Kraftstoffinjektors **1)** und einen Steuerfluid- bzw. Leckage-Abströmzweig **83** geschaltet, dass in einer ersten von zwei Schaltstellungen des 3/2-Wege-Ventils **67** (welche in **Fig.** 1 veranschaulicht ist) jeweilige Schließdruck-Steuerräume **59** über den Steuerfluid-Versorgungszweig **79** und den nachgeordneten Strömungsweg, gebildet mittels dem Abzweig **73** und dem Strömungsweg **71** hydraulisch belastet werden, während die Öffnungsdruck-Steuerräume **61** damit einhergehend hydraulisch mit konstantem Niveau belastet sind. In dieser Stellung wird das jeweilige Brenngas-Düsenventilglied **9** in Schließstellung gedrängt.

In der zweiten von zwei Schaltstellungen des 3/2-Wege-Ventils **67** werden jeweilige Öffnungsdruck-Steuerräume **61** über eine Steuerleitung weiterhin und unabhängig von der Schaltstellung des 3/2-Wege-Ventils **67** mit konstantem Niveau hydraulisch belastet, während die Schließdruck-Steuerräume **59** damit einhergehend hydraulisch entlastet sind, das heißt durch Abströmen von Steuerfluid aus den Schließdruck-Steuerräumen **59** über den Strömungsweg **71** und den Abzweig **73** sowie nachfolgend den Leckage-Abströmzweig **83.**

Eingerichtet ist der Kraftstoffinjektor **1** hierbei insbesondere, das 3/2-Wege-Ventil **67** in Ruhestellung (nicht aktiviert) in die in **Fig.** 1 gezeigte Stellung zu schalten, das heißt die Öffnungsdruck-Steuerräume **61** sind sämtlich belastet, die Schließhub-Steuerräume **59** sind sämtlich belastet. Ein Umschalten des 3/2-WegeVentils **67** (aktiviert) kann bevorzugt mittels eines Magnetaktuators mit Rückstellfeder erfolgen.

Mit dem derart ausgestalteten Kraftstoffinjektor **1** ist weiterhin insbesondere vorgesehen, dass das Steuerfluid zur Steuerung der Mehrzahl von Brenngas-Düsenventilgliedern **9** über eine separate Steuerfluidquelle einer Kraftstoffeinspritzeinrichtung an die Steuerräume **59, 61** versorgt wird, so dass eine Hubsteuerung ermöglicht wird, welche - bei Ausgestaltung mit möglichst vernachlässigbarer Druckstufe an den Brenngas-Düsenventilgliedern **9** - weitgehend unbeeinflusst vom Brenngasdruck aber auch sonstigen Mediendruckniveaus wie etwa dem Systemdruck des Flüssigkraftstoffteils **3** ist. Das heißt, der Flüssigkraftstoffteil **3** ist hydraulisch insbesondere vom Brenngasteil **5** entkoppelt (vgl. auch **Fig.** 1). Angemerkt sei noch, dass bei der Ausgestaltung nach **Fig.** 1 jeweilige Schließdruck-Steuerräume **59** zum Beispiel zylindrisch sind, während die jeweiligen Öffnungsdruck-Steuerräume **61,** gebildet um einen stangenförmigen Abschnitt des jeweiligen Brenngas-Düsenventilglieds **9,** als Ringräume bereitgestellt sind.

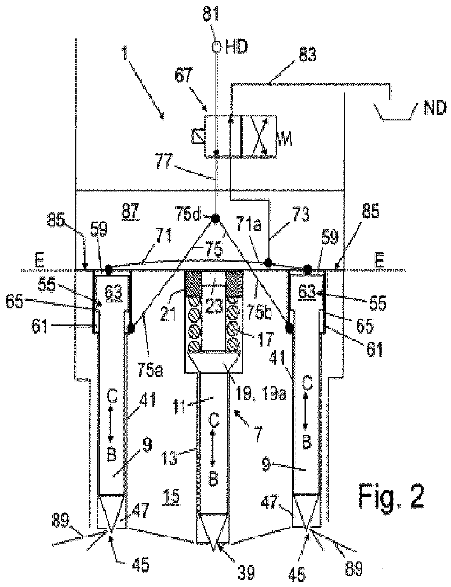

**Fig.** 2 veranschaulicht nunmehr eine Ansicht eines Kraftstoffinjektors **1** gemäß einem Vergleichsbeispiel, das zum Verständnis der vorliegenden Erfindung beitragen kann, insbesondere Dual-Fuel-Kraftstoffinjektors, bei welcher zwei Brenngas-Düsenventilglieder **9** sowie das zentrale Flüssigkraftstoff-Düsenventilglied **11** aufgenommen in einem Düsenkörper **15** dargestellt sind, wobei die Brenngas-Düsenventilglieder **9** insbesondere - über das 3/2-Wege-Ventil **67** - in Öffnungsstellung gesteuert gezeigt sind (Brenngas-Betrieb). Strömungswege des Flüssigkraftstoffteils **3** und ein Brenngasströmungsweg **49** sind hierbei nicht dargestellt.

Wie **Fig.** 2 hierbei verdeutlicht, kann ein jeweiliger Schließdruck-Steuerraum **59** bzw. das Gehäuse **65** einer jeweiligen Kolbensteueranordnung **55** mittels einer Querschnittserweiterung der axialen Aufnahme **41** gebildet sein, welche auf einfache Weise ausgehend von einer düsenfernen Oberfläche **85** des Düsenkörpers **15** in denselben gearbeitet werden können, das heißt als Stufenbohrung. Ersichtlich wird hierbei bevorzugt auch die Axialbohrung **13** des Flüssigkraftstoff-Düsenventilglieds **11** samt dem darin gebildeten Steuerraum **23** seitens derselben Oberfläche **85** des Düsenkörpers gebildet, wobei bei dieser Anordnung, bei welcher die düsenfernen Enden der Steuerräume **59, 23** je in einer gemeinsamen (radialen) Ebene E liegen, äußerst unaufwändig sämtliche Schließdruck-Steuerräume **59** sowie der Steuerraum **23** des Flüssigkraftstoff-Düsenventilglieds **11** mit einem planen Element, insbesondere einem Injektorgehäuseelement, bevorzugt einer Zwischenscheibe oder - platte **87,** unaufwändig auch deckelbar sind.

In der gezeigten Öffnungsstellung ist Brenn- gas über die Brenngas-Düsenöffnungen der Brenngas-Düsengruppen **45** ausbringbar, bevorzugt mit radial nach außen weisender Richtungskomponente der Brenngas-Strahlen **89.**

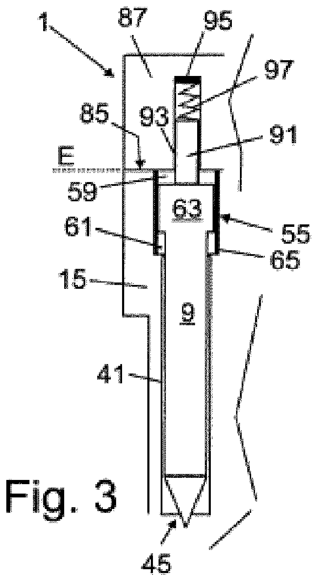

**Fig.** 3 zeigt nunmehr eine abgebrochene Ansicht des Kraftstoffinjektors **1** gerichtet auf ein Brenngas-Düsenventilglied **9** (stellvertretend für die Mehrzahl von Brenngas-Düsenventilgliedem **9)** gemäß einer weiteren bevorzugten Ausgestaltung der Erfindung, wobei sowohl der Schließhub-Steuerraum **59** als auch der Öffnungsdruck-Steuerraum **61** je als Ringraum gebildet sind.

Bei der in **Fig.** 3 dargestellten Ausgestaltung wird ein jeweiliges Brenngas-Düsenventilglied **9** in Schließrichtung B durch ein Schließglied **91** belastet, welches federelastisch in Schließrichtung B vorgespannt ist. Das Schließglied **91** ist in einer Aufnahme **93** angeordnet, welche mittels einer Bohrung gebildet ist (wobei die Bohrung koaxial mit der Axialbohrung **41** des Brenngas-Düsenventilglieds 9 orientiert ist). Die Aufnahme **93** ist zum Beispiel in einem Injektorgehäuseelement wie einer Zwischenplatte **87** gebildet, bevorzugt jeweilige Schließdruck-Steuerräume **59** deckelnd (wie z. B. anhand von **Fig.** 2 erörtert).

In der Aufnahme **93** ist - endseitig und düsenfern - weiterhin ein Einstellelement **95** angeordnet, welches dazu dient, die auf das Schließglied **91,** mithin das Brenngas-Düsenventilglied **9** wirkende Federkraft einer Druckfeder **97** einzustellen. Das Einstellelement **95** kann eine einfache Scheibe sein, wobei die Federkraft in Abhängigkeit der Dicke der in der Aufnahme **93** angeordneten Scheibe einstellbar ist. Hierüber wird es möglich, einen etwaigen unerwünschten Zeitversatz bei einem Hubvorgang - über die Mehrzahl der Brenngas-Düsenventilglieder **9** hinweg betrachtet - zu reduzieren durch gezielte Änderung der auf ein Brenngas-Düsenventilglied **9** wirkenden Federkraft mittels des Einstellelements **95.**

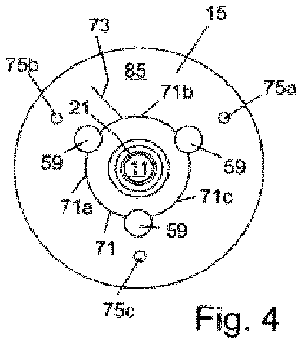

**Fig.** 4 zeigt exemplarisch und schematisch eine Draufsicht auf ein düsenfernes Ende eines Düsenkörpers **15** eines erfindungsgemäßen Kraftstoffinjektors **1,** wobei ein Strömungsweg **71** in Form einer Ringleitung veranschaulicht ist, welche - mittels einer Ringnut gebildet - die Schließdruck-Steuerräume **59** kommunizierend verbindet, d. h. über Kanalabschnitte **71a, b, c.** Die Schrägbohrungen zur Herstellung der Sternleitung im Rahmen der Strömungsverbindung **75** der Öffnungsdruck-Steuerräume **61** sind ausgehend von dem düsenfernen Ende des Düsenkörpers **15** abschnittsweise in denselben gearbeitet. Ein Abschnitt des Abzweigs **73** zur Anbindung der Ringleitung an das 3/2-Wege-Ventil **67** ist weiterhin veranschaulicht. Ersichtlich ist zentral das Flüssigkraftstoff-Düsenventilglied **11** samt der Führungshülse **21** angeordnet. Hierbei ergeben sich neben einfacher Montage äußerst kompakte Injektorabmessungen.

## Patentansprüche

1. Kraftstoffinjektor (1) für den Betrieb mit Brenngas, wobei der Kraftstoffinjektor (1) eine Mehrzahl von Brenngas-Düsenventilgliedern (9) aufweist, wobei ein jedes der Brenngas-Düsenventilglieder über je eine zugeordnete hydraulische Kolbensteueranordnung (55) des Kraftstoffinjektors hubsteuerbar ist, welche je mittels zweier Steuerräume (59, 61) und einem dieselben volumenvariabel trennenden Kolbenabschnitt (63) an dem der Kolbensteueranordnung zugeordneten Brenngas-Düsenventilglied gebildet ist, wobei einer der Steuerräume der Kolbensteueranordnung ein Schließdruck-Steuerraum (59) ist, über welchen bei hydraulischer Belastung eine Schließkraft auf die Mehrzahl von Brenngas-Düsenventilgliedern ausübbar ist, und der andere der Steuerräume einer jeweiligen Kolbensteueranordnung (55) ein Öffnungsdruck-Steuerraum (61) ist, über welchen bei hydraulischer Belastung eine Öffnungskraft auf das jeweilige zugeordnete Brenngas-Düsenventilglied (9) ausübbar ist,
**dadurch gekennzeichnet, dass**
der Kraftstoffinjektor zur gemeinschaftlichen Hubsteuerung der Brenngas-Düsenventilglieder mittels eines 3/2-Wege-Ventils (67) eingerichtet ist, über welches ein Hydraulikdruck in einem (59) der zwei Steuerräume (59, 61) der Kolbensteueranordnungen gesteuert wird, wobei
der Kraftstoffinjektor eingerichtet ist, ein erstes einheitliches Hydraulikdruck-Niveau in den Öffnungsdruck-Steuerräumen (61) aufzuweisen und ein zweites einheitliches Hydraulikdruck-Niveau in den Schließdruck-Steuerräumen (59) mittels des 3/2-Wege-Ventils (67) einzusteuern, und
der Öffnungsdruck-Steuerraum (61) dauerhaft mit einem Steuer- bzw. Sperröldruck über eine Steuerleitung beaufschlagt ist, die nicht mit dem Schließdruck-Steuerraum (59) verbunden ist.

2. Kraftstoffinjektor nach Anspruch 1,
**dadurch gekennzeichnet, dass**
die Öffnungsdruck-Steuerräume (61) über einen Strömungsweg (71) miteinander kommunizierend verbunden sind;
und/oder
die Schließdruck-Steuerräume (59) über eine Strömungsverbindung (75) miteinander kommunizieren, welche an das 3/2-Wege-Ventil (67) zur gemeinschaftlichen Hubsteuerung (9) der Brenngas-Düsenventilglieder kommunizierend angebunden ist.

3. Kraftstoffinjektor nach Anspruch 2,
**dadurch gekennzeichnet, dass**
der Strömungsweg (71) eine Ringleitung oder eine Sternleitung bildet, über welche die Schließdruck-Steuerräume (59) kommunizieren;
und/oder
die Strömungsverbindung (75) eine Sternleitung oder eine Ringleitung bildet, über welche die Öffnungsdruck-Steuerräume (61) kommunizieren.

4. Kraftstoffinjektor nach Anspruch 3,
**dadurch gekennzeichnet, dass**
eine Ringleitung mittels einer Ringnut gebildet ist, insbesondere in eine düsenferne Oberfläche eines die Brenngas-Düsenventilglieder (9) aufnehmenden Düsenkörpers (15) des Kraftstoffinjektors (1) gearbeitet.

5. Kraftstoffinjektor nach einem der vorhergehenden Ansprüche, **dadurch gekennzeichnet, dass**
der Kraftstoffinjektor (1) eingerichtet ist, das erste einheitliche Hydraulikdruck-Niveau mittels eines hydraulischen Steuerfluides zu erzeugen;
und
das zweite einheitliche Hydraulikdruck-Niveau mittels eines hydraulischen Steuerfluides zu erzeugen, welches eigens für die Drucksteuerung über das 3/2-Wege-Ventil (67) an die Schließdruck-Steuerräume (59) versorgt wird.

6. Kraftstoffinjektor nach einem der Ansprüche 1 bis 5, **dadurch gekennzeichnet, dass**
die Schließdruck- (59) und/oder Öffnungsdruck-Steuerräume (61) Ringräume sind.

7. Kraftstoffinjektor nach einem der vorhergehenden Ansprüche, **dadurch gekennzeichnet, dass**
der Kraftstoffinjektor (1) je Brenngas-Düsenventilglied (9) ein vorspannkraftbeaufschlagtes Schließglied (91) aufweist, welches düsenfern gegen das Brenngas-Düsenventilglied gedrängt ist, wobei insbesondere ein ringraumförmiger Schließdruck-Steuerraum (59) gebildet wird.

8. Kraftstoffinjektor nach einem der vorhergehenden Ansprüche, **dadurch gekennzeichnet, dass**
die Kolbensteueranordnungen (55) in einer gemeinsamen Ebene ein düsenfernes Ende aufweisen, an welchem mittels eines Injektorgehäuseelements (87) eine Deckelung der Schließdruck-Steuerräume (59) bewirkt ist, wobei, optional, mit dem Injektorgehäuseelement (87) in der gemeinsamen Ebene auch eine Deckelung eines Steuerraumes eines Flüssigkraftstoff-Düsenventilglieds (11) des Kraftstoffinjektors (1) bewirkt ist.

9. Kraftstoffinjektor nach einem der vorhergehenden Ansprüche, **dadurch gekennzeichnet, dass**
das 3/2-Wege-Ventil (67) als Schieberventil ausgestaltet ist.

10. Kraftstoffinjektor nach einem der vorhergehenden Ansprüche, **dadurch gekennzeichnet, dass**
die Mehrzahl von Brenngas-Düsenventilgliedern (9) über den Umfang des Kraftstoffinjektors verteilt angeordnet sind, insbesondere gleichverteilt.

11. Kraftstoffinjektor nach einem der vorhergehenden Ansprüche, **dadurch gekennzeichnet, dass**
der Kraftstoffinj ektor ein Dual-Fuel-Kraftstoffinj ektor ist;
und/oder
die Mehrzahl an Brenngas-Düsenventilglieder um ein Flüssigkraftstoff Düsenventilglied herum angeordnet ist.

12. Kraftstoffeinspritzeinrichtung,
**dadurch gekennzeichnet, dass**
die Kraftstoffeinspritzeinrichtung wenigstens einen Kraftstoffinjektor nach einem der vorhergehenden Ansprüche aufweist.

13. Kraftstoffeinspritzeinrichtung nach Anspruch 12, **dadurch gekennzeichnet, dass**
die Kraftstoffeinspritzeinrichtung eine separate Steuerfluid-Versorgungseinrichtung für die gemeinschaftliche Hubsteuerung der Brenngas-Düsenventilglieder über das 3/2-Wege-Ventil aufweist.

14. Brennkraftmaschine, **gekennzeichnet durch** wenigstens einen Kraftstoffinjektor nach einem der Ansprüche 1 bis 11 oder eine Kraftstoffeinspritzeinrichtung nach den Ansprüchen 12 oder 13.

## Claims

1. Fuel injector (1) for operation with fuel gas, wherein the fuel injector (1) has a plurality of fuel gas nozzle valve members (9), wherein each of the fuel gas nozzle valve members is lift-controllable via in each case one assigned hydraulic piston control assembly (55) of the fuel injector, which is in each case formed by means of two control chambers (59, 61) and a piston portion (63) which separates the latter in a volumetrically variable manner and on which the fuel gas nozzle valve member assigned to the piston control assembly is formed, wherein one of the control chambers of the piston control assembly is a closing pressure control chamber (59), via which a closing force is able to be exerted on the plurality of fuel gas nozzle valve members under hydraulic load, and the other of the control chambers of a respective piston control assembly (55) is an opening pressure control chamber (61), via which an opening force is able to be exerted on the respective associated fuel gas nozzle valve member (9) under hydraulic load,
**characterized in that**
the fuel injector is specified for the common lift control of the fuel gas nozzle valve members by means of a 3/2-way valve (67), via which a hydraulic pressure in one (59) of the two control chambers (59, 61) of the piston control assemblies is controlled, wherein
the fuel injector is specified to have a first uniform hydraulic pressure level in the opening pressure control chambers (61) and to trigger a second uniform hydraulic pressure level in the closing pressure control chambers (59) by means of the 3/2-way valve (67), and
the opening pressure control chamber (61) is permanently impinged with a control or blocking oil pressure via a control line that is not connected to the closing pressure control chamber (59).

2. Fuel injector according to Claim 1,
**characterized in that**
the opening pressure control chambers (61) are connected so as to communicate with one another by way of a flow path (71);
and/or
the closing pressure control chambers (59) communicate with one another by way of a fluidic connection (75) which is linked so as to communicate with the 3/2-way valve (67) for the common lift control (9) of the fuel gas nozzle valve members.

3. Fuel injector according to Claim 2,
**characterized in that**
the flow path (71) forms a loop line or a radial line by way of which the closing pressure control chambers (59) communicate;
and/or
the fluidic connection (75) forms a radial line or a loop line by way of which the opening pressure control chambers (61) communicate.

4. Fuel injector according to Claim 3,
**characterized in that**
a loop line is formed by means of an annular groove, in particular in a nozzle-distal surface of a nozzle body (15) of the fuel injector (1) that receives the fuel gas nozzle valve members (9).

5. Fuel injector according to one of the preceding claims, **characterized in that** the fuel injector (1) is specified to generate the first uniform hydraulic pressure level by means of a hydraulic control fluid;
and
to generate the second uniform hydraulic pressure level by means of a hydraulic control fluid which is supplied specifically for pressure control via the 3/2-way valve (67) to the closing pressure control chambers (59).

6. Fuel injector according to one of Claims 1 to 5, **characterized in that** the closing pressure (59) and/or opening pressure control chambers (61) are annular chambers.

7. Fuel injector according to one of the preceding claims, **characterized in that** the fuel injector (1) per fuel gas nozzle valve member (9) has one preloadimpinged closing member (91) which distal to the nozzle is urged toward the fuel gas nozzle valve member, wherein in particular a closing pressure control chamber (59) in the shape of an annular chamber is formed.

8. Fuel injector according to one of the preceding claims, **characterized in that** the piston control assemblies (55) in a common plane have a nozzle-distal end on which capping of the closing pressure control chambers (59) is effected by means of an injector housing element (87), wherein, optionally, with the injector housing element (87) in the common plane also capping of a control chamber of a liquid fuel nozzle valve member (11) of the fuel injector (1) is effected.

9. Fuel injector according to one of the preceding claims, **characterized in that** the 3/2-way valve (67) is designed as a slide valve.

10. Fuel injector according to one of the preceding claims, **characterized in that** the plurality of fuel gas nozzle valve members (9) are distributed over the circumference of the fuel injector, in particular uniformly distributed.

11. Fuel injector according to one of the preceding claims, **characterized in that** the fuel injector is a dual fuel injector;
and/or
the plurality of fuel gas nozzle valve members are disposed about a liquid fuel nozzle valve member.

12. Fuel injection installation,
**characterized in that**
the fuel injection installation comprises at least one fuel injector according to one of the preceding claims.

13. Fuel injection installation according to Claim 12, **characterized in that** the fuel injection installation has a separate control fluid supply installation for the common lift control of the fuel gas nozzle valve members via the 3/2-way valve.

14. Internal combustion engine, **characterized by** at least one fuel injector according to one of Claims 1 to 11 or a fuel injection installation according to Claims 12 or 13.

## Revendications

1. Injecteur de carburant (1) pour le fonctionnement au gaz combustible, l'injecteur de carburant (1) comportant une multitude d'éléments (9) de soupape à gicleurs de gaz combustible, la course de chacun des éléments de soupape à gicleurs de gaz combustible pouvant être commandée par respectivement un ensemble de commande de pistons (55) hydraulique associé de l'injecteur de carburant, lequel est formé sur l'élément de soupape à gicleurs de gaz combustible associé à l'ensemble de commande de piston au moyen de deux chambres de commande (59, 61) et d'une section (63) de piston séparant celles-ci en faisant varier le volume, une des chambres de commande de l'ensemble de commande de pistons étant une chambre de commande de pression de fermeture (59), par laquelle une force de fermeture peut être exercée sur la multitude d'éléments de soupape à gicleurs de gaz combustible lors d'une contrainte hydraulique, et l'autre des chambres de commande d'un ensemble de commande de pistons (55) respectif étant une chambre de commande de pression d'ouverture (61), par laquelle, une force d'ouverture peut être exercée sur l'élément (9) de soupape à gicleurs de gaz combustible associé respectif lors d'une contrainte hydraulique,
**caractérisé en ce que**
l'injecteur de carburant est mis au point pour la commande commune de course des éléments de soupape à gicleurs de gaz combustible au moyen d'un distributeur à 3/2 voies (67), par lequel une pression hydraulique est commandée dans une (59) des deux chambres de commande (59, 61) des ensembles de commande de pistons,
l'injecteur de carburant est mis au point pour présenter un premier niveau de pression hydraulique unitaire dans les chambres de commande de pression d'ouverture (61) et pour commander un deuxième niveau de pression hydraulique unitaire dans les chambres de commande de pression de fermeture (59) au moyen du distributeur à 3/2 voies (67), et
la chambre de commande de pression d'ouverture (61) est soumise durablement à l'action d'une pression de commande ou d'une pression d'huile de barrage par une ligne de commande qui n'est pas reliée à la chambre de commande de pression de fermeture (59).

2. Injecteur de carburant selon la revendication 1,
**caractérisé en ce que**
les chambres de commande de pression d'ouverture (61) sont reliées en communication entre elles par une voie d'écoulement (71) ;
et/ou
les chambres de commande de pression de fermeture (59) communiquent entre elles par une liaison d'écoulement (75), qui est rattachée en communication au distributeur à 3/2 voies (67) pour la commande (9) commune de course des éléments de soupape à gicleurs de gaz combustible.

3. Injecteur de carburant selon la revendication 2,
**caractérisé en ce que**
la voie d'écoulement (71) forme une conduite annulaire ou une conduite en étoile, par laquelle les chambres de commande de pression de fermeture (59) communiquent ;
et/ou
la liaison d'écoulement (75) forme une conduite en étoile ou une conduite annulaire, par laquelle les chambres de commande de pression d'ouverture (61) communiquent.

4. Injecteur de carburant selon la revendication 3,
**caractérisé en ce que**
une conduite annulaire est formée au moyen d'une rainure annulaire, en particulier est ménagée dans une surface à l'écart des gicleurs d'un corps (15) de gicleur de l'injecteur de carburant (1) recevant les éléments (9) de soupape à gicleurs de gaz combustible.

5. Injecteur de carburant selon l'une des revendications précédentes, **caractérisé en ce que**
l'injecteur de carburant (1) est mis au point pour générer le premier niveau de pression hydraulique unitaire au moyen d'un fluide de commande hydraulique ;
et
pour générer le deuxième niveau de pression hydraulique unitaire au moyen d'un fluide de commande hydraulique, lequel est fourni aux chambres de commande de pression de fermeture (59) spécifiquement pour la commande de pression par le distributeur à 3/2 voies (67).

6. Injecteur de carburant selon l'une des revendications 1 à 5, **caractérisé en ce que**
les chambres de commande de pression de fermeture (59) et/ou de pression d'ouverture (61) sont des chambres annulaires.

7. Injecteur de carburant selon l'une des revendications précédentes, **caractérisé en ce que**
l'injecteur de carburant (1) comporte par élément (9) de soupape à gicleurs de gaz combustible, un élément de fermeture (91) soumis à l'action d'une force de précontrainte, lequel est repoussé à l'écart des gicleurs contre l'élément de soupape à gicleurs de gaz combustible, une chambre de commande de pression de fermeture (59) de forme annulaire étant formée en particulier.

8. Injecteur de carburant selon l'une des revendications précédentes, **caractérisé en ce que**
les ensembles de commande (55) de pistons comportent, dans un plan commun, une extrémité à l'écart des gicleurs, sur laquelle un plafonnement des chambres de commande de pression de fermeture (59) est entraîné au moyen d'un élément (87) de boîtier d'injecteur, en option, un plafonnement d'une chambre de commande d'un élément (11) de soupape à gicleurs de carburant liquide de l'injecteur de carburant (1) étant entraîné également dans le plan commun avec l'élément (87) de boîtier d'injecteur.

9. Injecteur de carburant selon l'une des revendications précédentes, **caractérisé en ce que**
le distributeur à 3/2 voies (67) étant configuré sous la forme d'une soupape à coulisse.

10. Injecteur de carburant selon l'une des revendications précédentes, **caractérisé en ce que**
la multitude d'éléments (9) de soupape à gicleurs de gaz combustible sont disposés selon une répartition, en particulier selon une répartition uniforme, sur la périphérie de l'injecteur de carburant.

11. Injecteur de carburant selon l'une des revendications précédentes, **caractérisé en ce que**
l'injecteur de carburant est un injecteur bicarburant ;
et/ou
la multitude d'éléments de soupape à gicleurs de gaz combustible est disposée tout autour d'un élément de soupape à gicleurs de carburant liquide.

12. Dispositif d'injection de carburant,
**caractérisé en ce que**
le dispositif d'injection de carburant comporte au moins un injecteur de carburant selon l'une des revendications précédentes.

13. Dispositif d'injection de carburant selon la revendication 12, **caractérisé en ce que**
le dispositif d'injection de carburant comporte un dispositif de fourniture de fluide de commande pour la commande commune de la course des éléments de soupape à gicleurs de gaz combustion par le distributeur à 3/2 voies.

14. Moteur à combustion interne, **caractérisé par** au moins un injecteur de carburant selon l'une des revendications 1 à 11 ou un dispositif d'injection de carburant selon les revendications 12 ou 13.
